# EUROPÄISCHE PATENTSCHRIFT

(11) **EP 0 555 527 B1**
(45) Veröffentlichungstag und Bekanntmachung des Hinweises auf die Patenterteilung: **08.03.1995**
(21) Anmeldenummer: 92118159.0
(22) Anmeldetag: 23.10.1992
(51) Int. Cl.: G05B 19/04

(54) **Schaltwerk**
Sequential circuit
Circuit séquentiel

(30) Priorität: 25.01.1992 DE 4202015
(43) Veröffentlichungstag der Anmeldung: 18.08.1993
(73) Patentinhaber: ANT Nachrichtentechnik GmbH, D-71522 Backnang (DE)
(72) Erfinder: Kaffenberger, Rüdiger, Dipl.-Ing., W-7151 Allmersbach/Tal (DE)

(56) Entgegenhaltungen:
- EP-A- 0 363 905
- PATENT ABSTRACTS OF JAPAN vol. 009, no. 239 (P-391)25. September 1985
- PATENT ABSTRACTS OF JAPAN vol. 8, no. 242 (P-311)(1679) 7. November 1984
- Halbleiter-Schaltungstechnik,9 Auflage, 1990,Springer-Verlag (DE), U. Tietze, Ch. Schenk, Seite 207 und 679.

## Beschreibung

Die Erfindung betrifft ein Schaltwerk.zur Informationsübertragung zwischen einem Prozeßrechner und einem weiteren Absender/Empfänger gemäß Oberbegriff des Anspruches 1 (siehe EP-A- 363905).

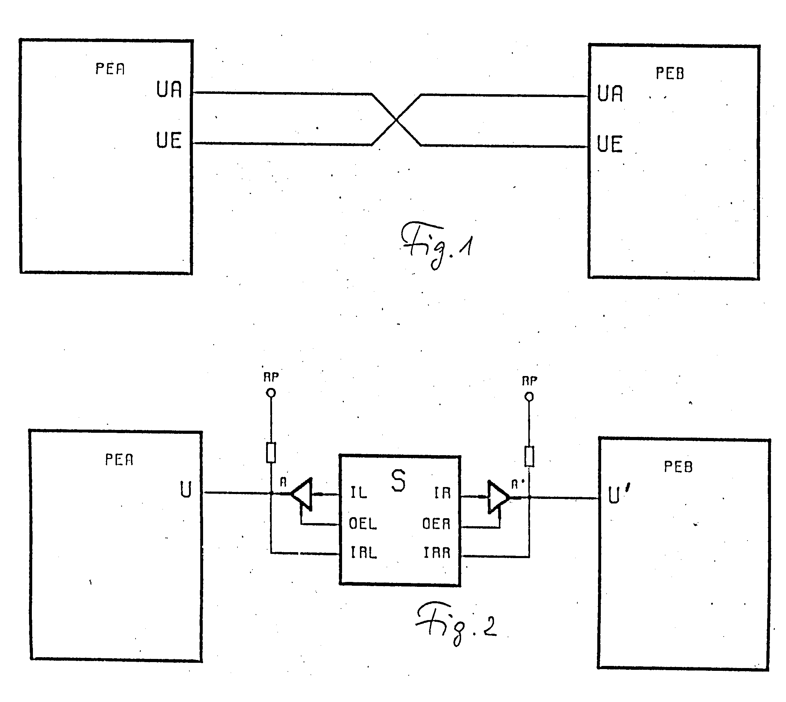

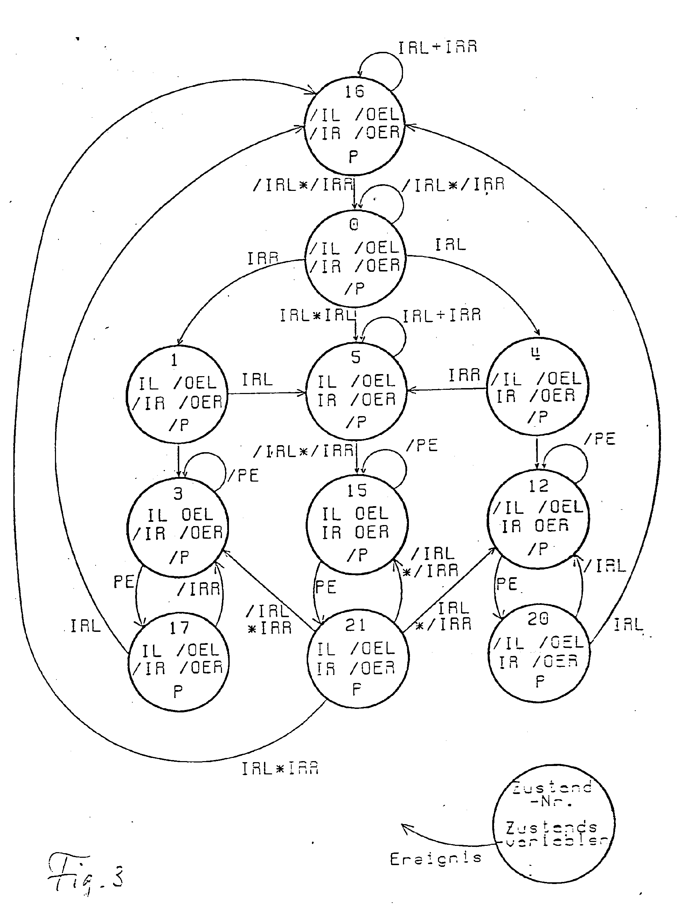

Solche Schaltwerke sind bekannt, beispielsweise aus EP-A-363905 A2, Seite 3, Zeilen 22-49, mit zugehöriger Figur 3 und ähnliche Schaltwerke aus der Sonderausgabe Elektronik "Mikroprozessoren", Franzis-Verlag, München, 1977, Seiten 41 - 47. In komplexen Steuer- und Überwachungseinrichtungen kommt es häufig vor, daß entweder die Anzahl der zur Verfügung stehenden Unterbrechungseingänge, Eingänge und Ausgänge nicht ausreicht, obwohl einige Unterbrechungseingänge auch als Ausgänge arbeiten können und damit die Anzahl der Unterbrechungseingänge und der Ausgänge ausreichend vorhanden wären, aber die Unterbrechungsein- und -Ausgänge nicht doppelt benutzbar sind, oder aber daß die Anzahl der zur Verfügung stehenden Leitungen, die an den Ein- und Ausgängen anzuschließen sind, nicht ausreicht.
Der vorliegenden Erfindung lag die Aufgabe zugrunde, ein Schaltwerk der eingangs genannten Art anzugeben, das es ermöglicht, seine Unterbrechungseingänge, die auch als Ausgänge verwendbar sind, als Eingang und Ausgang mit einer einzigen angeschlossenen Leitung zu benutzen. Dies sollte mit möglichst wenig Zusatzaufwand erfolgen.
Diese Aufgabe wurde gelöst durch die Merkmale des Patentanspruches 1. Vorteilhafte Weiterbildungen ergeben sich durch die abhängigen Ansprüche.
Das erfindungsgemäße Schaltwerk ermöglicht die doppelte Nutzung seines Unterbrechereingangs, der auch als Ausgang benutzbar ist, sowohl als Unterbrechungseingang als auch als Ausgang, mit einer einzigen daran angeschlossenen Leitung.
Damit können zusätzlich erforderlich erscheinende Ausgänge eingespart werden, und es können auch Leitungsverbindungen eingespart werden. Dies ist wiederum dann von großem Vorteil, wenn die Anzahl der zur Verfügung stehenden Ports an den entsprechenden Baugruppen beschränkt ist.
Die Erfindung läßt sich insbesondere in komplexen Steuer- und Überwachungseinrichtungen mit mehreren Prozessoreinheiten, welche in Redundanz arbeiten oder/und um die anfallenden Aufgaben in Arbeitsteilung zu bewältigen, vorteilhaft einsetzen. Diese Prozessoreinheiten müssen Informationen miteinander austauschen. Häufig werden die auszutauschenden Informationen in einem Speicherelement abgelegt, auf das die Prozessoreinheiten gemeinsamen Zugriff haben. Soll nun der Kommunikationspartner unverzüglich auf die abgelegte Information zugreifen können, so muß er direkt Nachricht darüber erhalten, daß eine Information für ihn abgelegt wurde. Dazu dient eine Unterbrechungsanforderung an den Kommunikationspartner, welche den normalen Programmfluß unterbricht und der Prozessoreinheit die Möglichkeit gibt, die neue Information aufzunehmen. Die Figur 1 zeigt eine übliche Ausführung nach dem Stand der Technik. Sollen zwischen den beiden Prozessoreinheiten PEA, PEB Unterbrechungsanforderungen ausgetauscht werden können, so muß jede Prozessoreinheit einen Ausgang UA und einen Eingang UE aufweisen, der Unterbrechungsanforderungen an den Kern der Prozessoreinheit selbst auslösen kann. Der Ausgang der einen Prozessoreinheit wird mit dem Eingang der anderen verbunden und umgekehrt. Es sind also für den Austausch einer Unterbrechungsanforderung zwei Verbindungen notwendig. Für jede weitere Unterbrechungsanforderung oder zusätzliche Information, die ausgetauscht werden soll, sind ebenfalls immer zwei Verbindungen erforderlich.

Es folgt nun die Beschreibung der Erfindung anhand der Figuren. Die Figur 2 zeigt als Ausführungsbeispiel ein Schaltwerk gemäß der Erfindung, welches sequentiell in eine einzige Verbindungsleitung zwischen den kombinierten Ein-/Ausgängen U, U′ zweier miteinander kommunizierender Prozessoren PEA, PEB eingefügt ist.
Die Figur 3 schließlich zeigt ein Zustandsdiagramm für den Einsatzfall nach Figur 2 mit den verschiedenen auftretenden Zuständen des Prozessorensystems.

Bei der Schaltung nach Figur 2 haben beide Prozessoreinheiten einen Anschluß, der sowohl als Ausgang wie als Eingang fungieren kann und der, wenn er als Eingang arbeitet, eine Unterbrechungsanforderung an den Kern der Prozessoreinheit auslösen kann. Der Anschluß U des linken Prozessors ist mit einem Anschluß A des Schaltwerks verbunden, welcher ebenfalls sowohl Eingangs- als auch Ausgangsfunktion aufweist. Die Eingangsfunktion erfolgt über die Leitung IRL, welche für Interrupt-Request-Links steht. Die Ausgabefunktion erfolgt derart, daß ein Schaltverstärker vorgesehen ist, welcher bei den erlaubenden, durchschaltenden Steuersignal Output-Enable-Links OEL das am Eingang des Schaltverstärkers anstehende Signal Interrupt-Links IL an den Ausgang A durchschaltet. Im Ruhezustand liegt am Anschlußpunkt A über einen hochohmigen Widerstand das Ruhepotential RP.
Das Schaltwerk S weist auf der anderen Seite zum Prozessor PEB hin einen gleichartig aufgebauten Ein-/Ausgang auf, sein Anschlußpunkt A′ ist mit dem beispielsweise in ähnlicher Weise aufgebauten Ein-/Ausgang U′ des rechten Prozessors verbunden.

Die Funktionsweise des Schaltwerkes S wird durch das Zustandsdiagramm der Figur 3 beschrieben. Vom Ruhezustand 0 ausgehend erfolge beispielsweise eine Unterbrechung von der rechten Prozessoreinheit PEB durch die linke PEA und zwar in folgender Weise. Der linke Prozessor PEA aktiviert seinen Ein-/Ausgang U als Ausgang und legt dazu ein erstes Potential, welches aktiviert, an. Das Schaltwerk S erkennt diesen Zustandsübergang an seinem Anschluß A über seinen Eingang IRL und speichert ihn ab. Damit ist im rechten Pfad der Zustand 4 eingenommen. Die Abspeicherung erfolgt mit Sicherheit innerhalb einer Zeitspanne, welche beispielsweise der Prozessortaktperiode entspricht. Mit seinem nächsten Prozessortakt aktiviert der linke Prozessor seinen Ein-/Ausgang U als Eingang, so daß hier wieder das zweite Potential, das Ruhepotential RP am Anschluß A auftritt. Das Schaltwerk S überprüft nun, ob an seinem Anschluß A′ Ruhepotential anliegt. Ist das der Fall, so aktiviert das Schaltwerk S seinen Anschluß A′ als Ausgang und legt aktivierendes Potential an, das heißt Interrupt-Rechts IR und Output-Enable-Rechts OER gleich logisch 1 (Zustand 12). Dies bewirkt eine Unterbrechungsanforderung bei dem rechten Prozessor PEB. Dieser reagiert auf die Unterbrechungsanforderung, indem sein Ein-/Ausgang U′ als Ausgang mit aktivierendem ersten Potential aktiviert wird. Am Anschluß A′ tritt somit keine Potentialänderung auf. Mit seinem eigenen Systemtakt, den periodisch wiederkehrenden Poll-Ereignis PE, dessen Rate eine Größenordnung kleiner ist als der Systemtakt der Prozessoren, aktiviert das Schaltwerk S nunmehr seinen Anschluß A′ als Eingang, das heißt Interrupt-Rechts IR ist noch binär 1, während Output-Enable-Rechts OER binär 0 geworden ist: Damit ist eine Verschiebung vom Zustand 12 in den Zustand 20 erfolgt. Erkennt nunmehr das Schaltwerk S das Reaktionssignal IRR Interrupt-Request gleich binär 1 des rechten Prozessors, so erfolgt eine Verschiebung in den Zustand 16, wobei als Reaktion auf die Reaktion des rechten Prozessors das Interrupt-Signal IR zu binär 0 wird. Die letztendliche Quittung des rechten Prozessors dafür, daß er den Interrupt verarbeitet hat, zeigt der rechte Prozessor durch Rücknahme des Signals IRR zu 0, das heißt im Anschluß A′ liegt Ruhepotential an. Das Schaltwerk hat schon im Zustand 16 die gespeicherte Information über den Zustandsübergang an seinem Anschluß A gelöscht und ist nun in seinen Ruhezustand 0 zurückgekehrt.

Das erfindungsgemäße Schaltwerk weist den Vorteil auf, daß der Austausch der Unterbrechungsanforderungen zwischen den beiden Prozessoren ermöglicht wird, ohne daß die damit verbundene Software komplexer und folglich fehleranfälliger wird.
Für den Fall, daß sich die Prozessoren nicht in räumlicher Nähe zueinander befinden oder daß die Anzahl der zur Verfügung stehenden Ports beschränkt ist, bedeutet die Einsparung an Verbindungen einen nicht unerheblichen Kostenvorteil. Vorteilhafterweise bildet das Schaltwerk mit dem Speicher auf den die beiden Prozessoren gemeinsam zugreifen, eine Einheit.

## Patentansprüche

1. Schaltwerk zur Informationsübertragung zwischen einem Prozeßrechner als Absender/Empfänger und einem weiteren Absender/Empfänger, das eine Anzahl von Ein- und Ausgängen aufweist, wobei den beiden Fällen Information und keine Information ein erstes Potential bzw. ein zweites Potential zugeordnet sind und wobei an den Eingängen abgefragt wird, welches der beiden möglichen Potentiale anliegt, und wobei in den Ausgängen die beiden möglichen Potentiale erzeugt werden, wobei wenigstens ein Eingang auch als Ausgang verwendbar ist und wobei das Schaltwerk derart ausgelegt ist, daß eine weiter zu leitende Information in das Schaltwerk eingespeichert wird, dadurch gekennzeichnet,
daß ein erster Ein-/Ausgang (A) des Schaltwerks (S) über eine einzige Leitung mit einem Ein-/Ausgang (U) des Prozeßrechners (PEA) verbindbar ist,
daß das Schaltwerk (S) einen weiteren Ausgang (IR) aufweist, über den die am Ein-/Ausgang (U) des Prozeßrechners (PEA) abgegebene Information an den weiteren Absender/Empfänger weitergeleitet wird,
daß das Schaltwerk (S) einen weiteren Eingang (IRR) aufweist, an dem eine Information von dem weiteren Absender/Empfänger aufgenommen und über den ersten Ein-/Ausgang (A) zum Ein-/Ausgang (U) des Prozeßrechners (PEA) weitergeleitet wird,
daß das Schaltwerk (S) derart ausgelegt ist, daß eine Zeitspanne vereinbart ist, innerhalb welcher die weiterzuleitende Information in das Schaltwerk (S) eingespeichert wird,
daß das Schaltwerk (S) derart ausgelegt ist, daß nach Ablauf dieser Zeitspanne das Schaltwerk (S) überprüft, ob der jeweilige Absender der Information vom ersten Potential auf das zweite Potential zurückschaltet, um dann die gespeicherte Information weiterzuleiten,
daß das Schaltwerk (S) derart ausgelegt ist, daß nach der Weiterleitung der Information durch das Schaltwerk (S) festgestellt wird, ob der Empfänger der Information durch Anlegen des ersten Potentials an seinem zugeordneten Ausgang reagiert und danach durch Rückschalten auf das zweite Potential quittiert, und
daß das Schaltwerk (S) derart ausgelegt ist, daß danach die im Schaltwerk (S) gespeicherte Information gelöscht und das Schaltwerk (S) in einen Ruhezustand versetzt werden, in dem es neue Information aufnehmen kann.

2. Schaltwerk nach Anspruch 1, dadurch gekennzeichnet, daß es mit einem weiteren Prozeßrechner (PEB) verbindbar ist, der den weiteren Absender/Empfänger umfaßt.

3. Schaltwerk nach Anspruch 1 oder 2, dadurch gekennzeichnet, daß der weitere Eingang (IRR) und der weitere Ausgang (IR) des Schaltwerkes (S) durch einen zweiten Ein-/Ausgang (A′) realisiert ist, der auch als Ausgang verwendbar ist.

4. Schaltwerk nach Anspruch 2 und 3, dadurch gekennzeichnet, daß der weitere Prozeßrechner (PEB) über eine einzige Leitung mit dem zweiten Ein-/Ausgang (A′) des Schaltwerkes (S) verbindbar ist.

5. Schaltwerk nach einem der vorhergehenden Ansprüche, dadurch gekennzeichnet, daß die Ausgabe der Information über einen der Ein-/Ausgänge (A, A′) durch einen Schalter realisiert ist, der mittels eines Output-Enable-Steuersignales geschaltet wird und das erste Potential niederohmig auf die angeschlossene Leitung durchschaltet.

6. Schaltwerk nach einem der vorhergehenden Ansprüche, dadurch gekennzeichnet, daß die Eingabe der Information an einem der Ein-/Ausgänge (A, A′) über einen Interrupt-Request-Eingang erfolgt, der mit der Leitung verbunden ist.

7. Schaltwerk nach einem der vorhergehenden Ansprüche, dadurch gekennzeichnet, daß das zweite Potential über einen hochohmigen Widerstand dauernd an der angeschlossenen Leitung angelegt ist.

8. Schaltwerk nach einem der Ansprüche 2 bis 7, mit gemeinsamem Speicher für die beiden Prozeßrechner (PEA, PEB), dadurch gekennzeichnet, daß das Schaltwerk (S) mit dem gemeinsamen Speicher eine Einheit bildet.

## Claims

1. A logic circuit for transmitting information between a process computer as sender/receiver and a further sender/receiver, including a plurality of inputs and outputs, wherein the two cases information and no information are associated with a first and second potential, respectively, and wherein at the inputs a poll determines which of the two possible potentials is applied, and wherein at the outputs the two possible potentials are produced, with at least one input also being able to be used as output, and wherein the logic circuit is configured such that an information to be forwarded is stored in the logic circuit, characterized
in that a first input/output (A) of the logic circuit (S) can be connected to an input/output (U) of the process computer (PEA) by a single line,
in that the logic circuit (S) is provided with a further output (IR) by way of which the information supplied at the input/output (U) of the process computer (PEA) is forwarded to the further sender/receiver,
in that the logic circuit (S) is provided with a further input (IRR) at which an information from the further sender/receiver is picked up and forwarded via the first input/output (A) to the input/output (U) of the process computer (PEA),
in that the logic circuit (S) is configured such that a time span is specified within which the information to be forwarded is stored in the logic circuit (S),
in that the logic circuit (S) is configured such that, subsequent to the expiration of this time span, the logic circuit (S) checks whether the respective sender of the information switches back from the first potential to the second potential in order to subsequently forward the stored information,
in that the logic circuit (S) is configured such that, subsequent to forwarding the information by means of the logic circuit (S), it is determined whether the receiver of the information reacts by applying the first potential to its associated output and then acknowledges by switching back to the second potential, and
in that the logic circuit (S) is configured such that, subsequently, the information stored in the logic circuit (S) is deleted and the logic circuit (S) enters a quiescent state in which it can pick up new information.

2. A logic circuit according to claim 1, characterized in that it can be connected to a further process computer (PEB) which contains the further sender/receiver.

3. A logic circuit according to claim 1 or 2, characterized in that the further input (IRR) and the further output (IR) of the logic circuit (S) is realized by way of a second input/output (A′), which can also be used as output.

4. A logic circuit according to claims 2 and 3, characterized in that the further process computer (PEB) can be connected to the second input/output (A′) of the logic circuit (S) by a single line.

5. A logic circuit according to one of the preceding claims, characterized in that the output of the information is realized by means of one of the inputs/outputs (A, A′) via a switch that is switched by means of an output-enable control signal and that switches the first potential at low impedance through to the connected line.

6. A logic circuit according to one of the preceding claims, characterized in that the input of the information takes place at one of the inputs/outputs (A, A′) as a result of an interrupt-request input which is connected to the line.

7. A logic circuit according to one of the preceding claims, characterized in that the second potential is permanently applied via a high impedance resistor to the connected line.

8. A logic circuit according to one of claims 2 to 7, including a common memory for the two process computers (PEA, PEB), characterized in that the logic circuit (S) and the common memory form one unit.

## Revendications

1. Circuit de commutation pour le transfert d'informations entre un calculateur de processus servant d'émetteur/récepteur et un autre émetteur/récepteur, ce circuit de commutation présentant plusieurs entrées et sorties, un premier potentiel étant associé au cas "présence d'une information" et un second potentiel au cas "absence d'une information", les entrées étant questionnées pour savoir lequel des deux potentiels possibles est appliqué, les deux potentiels possibles étant créés dans les sorties, et au moins une entrée pouvant également être utilisée comme sortie, le circuit de commutation étant conçu de telle sorte qu'une autre information à envoyer dans le circuit de commutation est mise en mémoire, caractérisé en ce que:
une première entrée-sortie (A) du circuit de commutation (S) peut être reliée par un conducteur unique à une entrée-sortie (U) du calculateur de processus (PEA), en ce que le circuit de commutation (S) présente une autre sortie (IR) par laquelle l'information émise sur l'entrée-sortie (U) du calculateur de processus (PEA) est transmise à l'autre émetteur/récepteur,
en ce que le circuit de commutation (S) présente une autre entrée (IRR) sur laquelle est saisie une information provenant de l'autre émetteur-récepteur, cette information étant transmise à l'entrée-sortie (U) du calculateur de processus (PEA) par l'intermédiaire de la première entrée-sortie (A),
en ce que le circuit de commutation (S) est conçu de telle sorte qu'un laps de temps est convenu pendant lequel l'information à transmettre est conservée en mémoire dans le circuit de commutation (S),
en ce que le circuit de commutation (S) est conçu de telle sorte qu'après l'écoulement de ce laps de temps, le circuit de commutation (S) vérifie si l'émetteur de l'information est passé du premier potentiel au second potentiel, avant de transmettre l'information mise en mémoire,
en ce que le circuit de commutation (S) est conçu de telle sorte qu'après transmission de l'information par le circuit de commutation (S), il est vérifié si le récepteur de l'information a réagi en appliquant le premier potentiel à sa sortie associée, et a ensuite accusé réception par retour au second potentiel, et
en ce que le circuit de commutation (S) est conçu de telle sorte que l'information mise en mémoire dans le circuit de commutation (S) est ensuite effacée, et le circuit de commutation (S) est ramené dans un état de repos, dans lequel il peut reprendre une nouvelle information.

2. Circuit de commutation selon la revendication 1, caractérisé en ce qu'il peut être relié avec un autre calculateur de processus (PEB) qui comprend l'autre émetteur-récepteur.

3. Circuit de commutation selon la revendication 1 ou 2, caractérisé en ce que l'autre entrée (IRR) et l'autre sortie (IR) du circuit de commutation (S) sont réalisés par une seconde entrée-sortie (A′) qui peut être également utilisée comme sortie.

4. Circuit de commutation selon la revendication 2 et 3, caractérisé en ce que l'autre calculateur de processus (PEB) peut être relié par l'intermédiaire d'un conducteur unique à la seconde entrée-sortie (A′) du circuit de commutation (S).

5. Circuit de commutation selon l'une des revendications précédentes, caractérisé en ce que l'émission des informations est réalisée par un commutateur par l'intermédiaire d'une des entrées-sorties (A, A′) ce commutateur étant basculé au moyen d'un signal de commande "Output-Enable" (activer la sortie), et en ce que le premier potentiel réalise la connexion à basse résistance avec le conducteur raccordé.

6. Circuit de commutation selon l'une des revendications précédentes, caractérisé en ce que l'introduction des informations sur l'une des entrées-sorties (A, A′) s'effectue par l'intermédiaire d'une entrée "Interrupt-Request" (demande d'interruption), reliée au conducteur.

7. Circuit de commutation selon l'une des revendications précédentes, caractérisé en ce que le second potentiel est appliqué en permanence sur le conducteur raccordé, par l'intermédiaire d'une résistance de haute valeur ohmique.

8. Circuit de commutation selon l'une des revendications 2 à 7, comportant une mémoire commune pour les deux calculateurs de processus (PEA, PEB), caractérisé en ce que le circuit de commutation (S) forme un tout avec la mémoire commune.
